# EUROPEAN PATENT SPECIFICATION

(11) **EP 1 509 385 B1**
(45) Date of publication and mention of the grant of the patent: **29.11.2006**
(21) Application number: 02807338.5
(22) Date of filing: 29.04.2002
(51) Int. Cl.: B29D 30/06, B29C 35/00

(54) **METHOD AND APPARATUS FOR MOULDING AND CURING A TYRE FOR VEHICLE**
VERFAHREN UND VORRICHTUNG ZUM FORMEN UND VULKANISIEREN VON FAHRZEUGREIFEN
PROCEDE ET APPAREIL DE MOULAGE ET DE DURCISSEMENT DESTINES A DES ROUES DE VEHICULE

(43) Date of publication of application: 02.03.2005
(73) Proprietor: Pirelli Tyre S.p.A., 20126 Milano (IT)
(72) Inventor: CARETTA, Renato, I-21013 Gallarate (IT); MARCHINI, Maurizio, I-20038 Seregno (IT)
(74) Representative: Brasca, Marco
(86) International application number: PCT/IB2002/001432
(87) International publication number: WO 2003/092988

(56) References cited:
- EP-A- 0 142 122
- EP-A- 0 578 105
- EP-A- 0 976 533
- EP-A- 1 084 811
- FR-A- 2 619 337
- US-A- 4 460 533
- US-A- 5 164 199

## Description

The present invention relates to a method and an apparatus for moulding and curing a tyre for vehicle wheels.

In a tyre production cycle it is provided that subsequently to a building process during which the different tyre components are manufactured and/or assembled, a moulding and curing process is carried out which aims at defining the tyre structure according to a desired geometric configuration, usually having a particular tread pattern.

To this aim, the tyre is closed in a moulding cavity which is defined internally of a vulcanization mould and shaped in accordance with the geometrical configuration of the outer tyre surfaces to be obtained.

A tyre generally comprises a carcass of toroidal ringshaped conformation, including one or more carcass plies braced with reinforcing cords lying in radial planes, i.e. containing the rotation axis of the tyre. Each carcass ply has its ends firmly associated with at least one annular reinforcing metal structure, usually known as bead ring, which forms a reinforcement for the beads, i.e. the radially internal ends of said tyre having the function of enabling assembling of the tyre with a corresponding mounting rim. Disposed crownwise on said carcass is a band of elastomeric material identified as tread band, in which at the end of the vulcanization and moulding steps a raised pattern is formed for ground-contact, which is adapted to ensure qualities of good traction ability, good output per kilometre, noiselessness and even wear resistance to said tyre. A reinforcing structure usually known as belt structure is placed between the carcass and tread band. This belt structure in the case of tyres for cars usually comprises at least two radially superposed strips of rubberized material provided with usually metallic reinforcing cords disposed parallel to each other in each strip and in crossed relationship with the cords of the adjacent strip, preferably symmetrically disposed with respect to the equatorial plane of the tyre. Preferably at a radially external position said belt structure, at least on the ends of the underlying strips, also comprises a third layer of circumferentially-dispoeed (at 0 degrees) textile or metallic cords.

To the aims of the present description, it should be pointed out that by the term "elastomeric material" it is intended a composition comprising at least one elastomer polymer and at least one reinforcing filler. Preferably, this composition further comprises additives such as cross-linking ager.ts and/or plasticizers. Due to the presence of cross-linking agents, this material can be cross-linked by heating so as to form the final product.

US 5,164,199 discloses a bladder bladdedess-type dual-purpose tire vulcanizer which can be switched over from the bladder type to the bladderless type simply by replacing part of the machine.

EP 0 142 122 A2 discloses a method in which a shaped article is made from a blank having a substantially hollow inner space. In this method, the blank is placed in a mould, an elastically deformable heating bellows is introduced into the inner space, a fluid is introduced into the heating bellows and the blank is deformed under the effect of pressure and heat.

EP 0 578 105 A2 discloses a road vehicle curing reactor, wherein an annular forming mold for a green tire is enclosed by heat exchange elements of locally and selectively controllable temperature.

There are moulding and curing methods in which a green tyre disposed on a rigid toroidal support is set within the mould. These methods are preferably used for tyres that, in accordance with recent building processes, are produced starting from a limited number of elementary semifinished products fed to a toroidal support the outer profile of which matches that of the radially internal surface of the tyre that is wished to be produced. Said toroidal support is moved, preferably by a robotized system, through a plurality of stations in each of which a particular tyre-building step is carried out, through automated sequences (see document EP 0 928 680 in the name of the same Applicant, for example).

The European Patent Application issued under No. 0 976 533 in the name of the same Applicant discloses a method and an apparatus for moulding and curing tyres for vehicle wheels in which a green tyre built on a toroidal support is closed in a vulcanization mould; subsequently steam or another fluid under pressure is fed into at least one fluid-diffusion gap created between the outer surface of the toroidal support and the inner surface of the tyre. In said application use of steam as the working fluid is specifically illustrated and described.

The Applicant has found that while use of steam as the working fluid is efficient for vulcanization, it has some drawbacks when it is brought into contact with the tyre.

In fact, during the starting step of the vulcanization process, hereinafter referred to as conformation step, steam by acting for a relatively long period of time (5-6 minutes, with a pressure of about 8 bars) in contact with the tyre being cured, may cause a partial slipping off of the carcass ply/plies from the bead region of the tyre.

This may reduce tensioning of the cords present in said plies in the finished tyre thereby worsening tyre performance in terms of ride comfort and easy drive.

In tubeless tyres in addition, imperviousness to air or air-tightness of the tyre under use conditions is obtained by a layer of elastomeric material identified as "liner", which layer during tyre building is the element directly in contact with said toroidal support.

It has been found that during vulcanization, the steam directly in contact with the inner tyre surface, i.e. said liner, can seep in creating small bubbles within the tyre itself.

In addition, said steam in contact with the toroidal support and the green tyre still cold, forms some condensate which generates a non-constant temperature range within the tyre itself.

The Applicant has also found that replacement of steam with a working fluid the critical temperature of which is lower than the vulcanization temperature does not enable a uniform vulcanization of the elastomeric material with which such a fluid comes into contact.

The Applicant has successfully experimented a vulcanization process (in particular of the type using a fluid directly in contact with the tyre) in which a fluid above its critical temperature is utilized in the presence of a circulation of the fluid itself.

In a first aspect of the invention it is provided a method of moulding and curing a tyre for vehicle wheels according to claim 1.

Since a fluid different from steam is submitted to circulation, the above described drawbacks are avoided in a direct manner: neither the liner and the rest of the tyre have bubbles at the inside thereof nor condensate is present during vulcanization. In addition, as better clarified in the following, the step of conforming the tyre during vulcanization by means of a working fluid different from steam, only lasts few ten seconds. Consequently, the carcass ply does not tend to slip off the bead as depicted hereinabove and the characteristics of ride comfort and easy drive are improved.

Finally, the above mentioned circulation enables tyres to be obtained that are cured in a uniform manner and show the planned features.

In a particular embodiment of the method of the invention, said circulation is of the closed-circuit type.

In a different embodiment of said method, said circulation is the open-circuit type.

In a different embodiment of the concerned method, said circulation step takes place by drawing said fluid off to the outside and restoring pressure through inflow of said fluid under pressure.

In another embodiment of said method, a step of recovering said fluid to use it again in a subsequent vulcanization operation is provided.

In a second aspect the invention relates to an apparatus for moulding and curing a tyre for vehicle wheels according to claim 6.

In a different embodiment, the circulation device for the working fluid comprises a recovery system for said working fluid comprising a recovery chamber and a compressor disposed in series, said recovery system being associated with said forced ventilation system.

In another embodiment, said circulation device comprises a discharge valve, a compressor, a delivery valve and ducts associated therewith.

Further features and advantages of the invention will become more apparent from the detailed description of some preferred but not exclusive embodiments of a method and an apparatus for moulding and curing a tyre for vehicle wheels in accordance with the present invention. This description will be set out hereinafter with reference to the accompanying drawings, given by way of non-limiting example, in which:
- Fig. 1 is a diagrammatic view partly in section showing an apparatus for moulding and curing a tyre for vehicle wheels in accordance with the invention;
- Fig. 2 is a diagrammatic view partly in section showing an alternative embodiment of the apparatus in Fig. 1;
- Fig. 3 is a diagrammatic view partly in section showing an apparatus for moulding and curing a tyre for vehicle wheels which is not part of the present invention;
- Fig. 4 is a diagrammatic view partly in section showing an alternative embodiment, which is not part of the present invention, of the apparatus in Fig. 3.

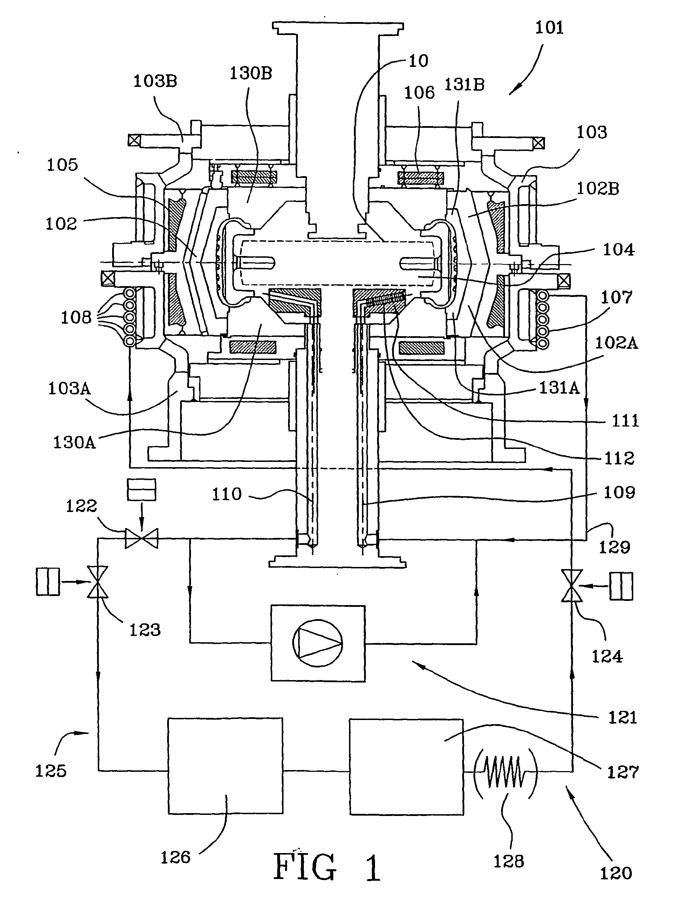

With reference to Fig. 1, an apparatus for moulding and curing tyres for vehicle wheels in accordance with a first embodiment of the present invention is identified by reference numeral 101.

Apparatus 101 comprises a vulcanization mould 102 operatively associated with a vulcanization press 103, both only diagrammatically shown because they are made as disclosed in the mentioned document EP 0 976 533 in the name of the same Applicant, for example.

Mould 102 may consist of a lower mould half 102A and an upper mould half 102B, in engagement with a bed 103A and a closing portion 103B of press 103, respectively.

In the embodiment shown by way of example, each of the lower and upper halves 102A and 102B of mould 102 has lower 130A and upper 130B cheeks respectively and a lower sector crown 131A and an upper sector crown 131B, respectively.

The lower 102A and upper 102B halves are mutually movable between an open condition in which they are spaced apart from each other and a closed position shown in the figures in which they are disposed close to each other to form a moulding cavity 104 the inner walls of which defined by said cheeks and sectors reproduce the geometric conformation of the outer surface of a tyre to be obtained at the end of the moulding and vulcanization steps.

In more detail, the cheeks are designed to form the outer surfaces of the opposite tyre sidewalls, whereas the sectors are intended to form the so-called tread band of the tyre itself, by creating a series of cuts and longitudinal and/or transverse grooves therein which are suitably disposed to form the desired "tread pattern".

Apparatus 101 further involves use of at least one toroidal support 10 of metallic or other solid material having an outer surface substantially reproducing the shape of an inner surface of the tyre. The toroidal support 10 conveniently consists of a collapsible drum i.e. made up of circumferential segments centripetally movable so as to take the toroidal support to pieces and enable easy removal of the tyre therefrom when working has been completed.

Apparatus 101 further involves heating devices preferably in the form of a plurality of ducts 105, 106, for passage of a heating fluid aiming at keeping mould 102 to temperature. The heating fluid employed in these ducts is preferably overheated steam that is preferably fed at a pressure included between 16 and 30 bars and at a temperature in the range of 170°C to 210°C.

Advantageously, other heating devices comprise a heat exchanger 107 disposed around the lower half 102A of mould 102 and preferably in the form of a pair of serpentine-shaped coaxial pipes 108 wound around said lower half. In particular, in the gap between the inner pipe and outer pipe, circulation of a steam flow is provided, whereas the inner pipe contemplates flowing of a working fluid intended for tyre moulding and vulcanization. This working fluid is preferably a fluid the critical temperature of which is lower than the vulcanization temperature.

Advantageously, the steam flowing in the gap between said coaxial pipes is the same steam flowing in ducts 105, 106 intended for heating of mould 102, so that the same heat source is advantageously exploited for heating said mould 102 and for a preheating step of said working fluid.

As diagrammatically shown in the figures, apparatus 101 involves delivery ducts 109 and return ducts 110 for said working fluid which have a length close to mould 102 buried in a block 111 preferably made of a material having a high heat-exchange coefficient (bronze, for example). Locally, around said delivery duct 109, provision is made for further heating devices buried in block 111 as well, preferably consisting of at least one series of electrical resistors 112. Said electrical resistors 112 are then operatively associated with at least one thermocouple (not shown) to control the operating temperature of same (values included between 530°C and 700°C are provided). A second thermocouple (not shown) is preferably provided within mould 102 to check the operating temperature of the working fluid (about 350°C-400°C).

Ducts 109, 110 are operatively associated with at least one passage device, by a connecting duct (not shown) for example, formed along at least one of the centring spigots of said toroidal support 10, to enable diffusion of said working fluid under pressure within said toroidal support.

Said passage device involves appropriate branches radially formed in the toroidal support 10 by which the working fluid reaches an annular chamber provided internally of the toroidal support itself. Pressure generated by said fluid extends therefrom through a plurality of ducts opening onto the outer surface of the toroidal support 10, suitably distributed on the circumferential extension of same.

Pressure generated by the working fluid therefore reaches a diffusion gap created between the outer surface of the toroidal support 10 and the inner surface of the green tyre.

In a preferential embodiment, the diffusion gap is created in a direct manner following an expansion of the tyre caused by effect of a thrust action exerted by said working fluid under pressure.

In other words, tyre pressing against the walls of the moulding cavity 104 takes place concurrently with an expansion imposed to the tyre itself until bringing the outer surface thereof to completely adhere to the inner walls of the moulding cavity 104.

Said ducts 109, 110 of apparatus 101 are also connected to at least one device 120 for forced circulation of the working fluid and possible recovery of same between one vulcanization operation and the subsequent one. In particular the fluid-recovering operation becomes useful when fluid having an intrinsic cost of its own is selected as the working fluid.

Said device 120 as shown in Fig. 1 comprises a forced ventilation system 121 that may comprise fans, pumps or other means adapted to obtain circulation of the working fluid, a discharge valve 122 for possible discharge of said fluid to the outside, in case of too much pressure for example, and a pair of valves 123, 124 of the return and delivery type respectively, to adjust return to a recovery system 125 and subsequent delivery to mould 120 of the working fluid, respectively. More specifically, said recovery system 125 comprises a recovery chamber 126 operatively associated with a compressor 127 for restoration of the operating pressure (about 28-30 bars, for example). The delivery valve 124 is connected to a duct 129 in turn associated with the inner one of the coaxial pipes 108, duct 129 coming out of said inner pipe being then connected to the forced ventilation system 121 to enable use of the working fluid at the end of the preheating step. In accordance with the method of the invention, the green tyre is disposed on the toroidal support 10 before the latter is inserted together with the tyre itself, into the vulcanization mould 102 set in an open condition.

In particular, engagement of the tyre on the toroidal support 10 can be conveniently obtained by directly building the tyre on the support itself. In this way the toroidal support 10 is advantageously utilized as a rigid shaped element for the purpose of forming and/or laying down the different components, such as carcass plies, reinforcing structures at the beads, belt strips, sidewalls and tread band co-operating in forming the tyre. Further details as regards forming and/or laying down of the tyre components on the toroidal support 10 can be found for example in the European Patent Application issued under No. 0 929 680 in the name of the same Applicant.

Operation of apparatus 101, after placing said toroidal support 10 carrying the green tyre within the mould itself, involves closing of said mould 102 and beginning of the moulding and vulcanization operations.

As already illustrated in document EP 0 976 533 in the name of the same Applicant, when the mould 102 is closed, the walls of the moulding cavity 104 keep some distance away from the outer surface of the green tyre, particularly at the tread band thereof. During this step at all events, the tread band can be partly penetrated by the raised portions or projections arranged on the sectors to define said tread pattern.

When closure of mould 102 has been completed, the green tyre is submitted to a pressing step with its outer surface against the walls of the moulding cavity 104, concurrently with heat supply to cause molecular cross-linking of the elastomeric material of which the tyre is made and consequent geometric and structural definition of the tyre itself.

To this aim, apparatus 101 is provided with the above described passage device. Advantageously, the working fluid causing achievement of the desired pressure thereby enabling moulding of the tyre, also supplies the required heat for vulcanization.

In particular, assuming use of a gas such as nitrogen as the working fluid operating above its critical temperature, said gas is fed to mould 102 by opening of valve 124. The nitrogen gas under pressure that on coming out of valve 124 has a pressure of about 28 bars and a temperature substantially corresponding to that of the surrounding atmosphere, is advantageously sent through duct 129 to the heat exchanger 107 and by passage in the serpentine-shaped coaxial pipes 108 it carries out a preheating step until reaching a temperature of about 80°C-100°C.

Duct 129 subsequently brings the nitrogen gas to the forced ventilation system 121 that admits it, through the delivery duct 109, to mould 102 and to the toroidal support 10 carrying the green tyre. Close to mould 102 the resistors 112 buried in the block 111 perform the step of heating nitrogen bringing it to a temperature of about 350°C-400°C. Nitrogen subsequently reaches the gap present between the tyre and the toroidal support starting the moulding and vulcanization step that has a duration of about 18-20 minutes.

At the end of the moulding and vulcanization step, before opening mould 102 to extract the tyre, reestablishment of ambient pressure inside said mould is required and at the same time nitrogen recovery appears to be suitable since the latter has an intrinsic cost of itself. For the purpose the return valve 123 of the forced circulation device 120 is opened and nitrogen is collected in the recovery chamber 126. Subsequently, after closing valve 123, a passage through compressor 127 restores an appropriate pressure value (about 28/30 bars), then said working fluid is again ready for a new moulding and vulcanization cycle on opening of the delivery valve 124.

It will be appreciated that in the method of the invention a fluid operating above its critical temperature (nitrogen in the example shown) is provided as the working fluid generating the necessary pressure and temperature for moulding and vulcanization, which fluid has a lower thermal-exchange ability as compared with that of steam which is employed in the known art.

The Applicant has ascertained that advantageously the closed-circuit circulation imposed to said inert fluid by the forced ventilation system 121 enables the fluid to transfer heat to the tyre in a homogeneous manner, thus obtaining a finished product of uniform cross-linking without, among other things, the disadvantages due to use of steam.

In addition, during the first instants of the moulding step the tyre-conformation cycle can be carried out in a very short period of time (about 10-30 seconds) due to the operating pressure of the working fluid that can be imposed even to values as high as 28-30 bars. More specifically, as the fluid under pressure comes into contact with the green tyre by said gap which is formed between the outer surface of the toroidal support 10 and the inner surface of the green tyre, said tyre begins conforming according to the mould dies. Simultaneously, the cords of the plies present in the tyre and in particular those belonging to the carcass ply or plies are tensioned without tending to partly slip off the bead area and in particular the bead ring, thereby ensuring ride comfort and easy drive to the moulded and vulcanized tyre.

Without wishing to be bound to any interpretative theory, the Applicant thinks that in the short period of time during which the working fluid brings the tyre against the mould die to the moulding pressure, the blends due to their high viscosity retain the ply ends in the bead region avoiding partial slipping off of same during the conformation step. The cords of the plies under these conditions grow longer; therefore they are submitted to tensioning enabling the above stated features to be obtained in the finished tyre. Finally, the Applicant has observed that since the plies do not tend to slip off, also the blends forming the bead region stay in the correct position thereby ensuring sizes and structure in accordance with the design.

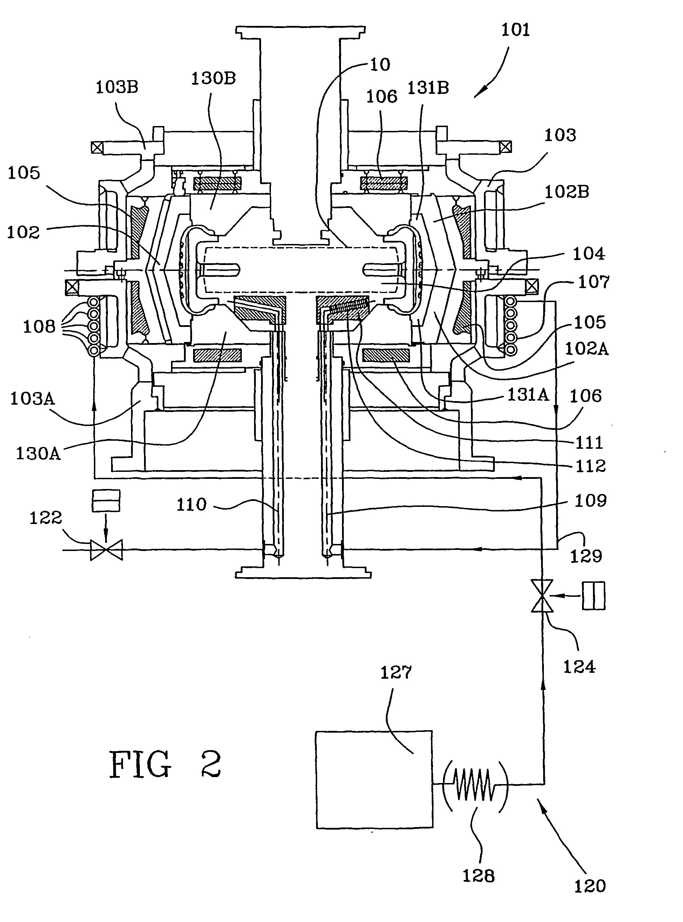

In an alternative solution, the working fluid can be air. In this case, as shown in Fig. 2, the whole device 120 for fluid circulation is preferably reduced to compressor 127, delivery valve 124, duct 129 and discharge valve 122, all of them connected with each other in series, so that an open-circuit circulation is obtained that at all events, as in the preceding example, surely enables the working fluid to transfer heat to the tyre in a homogeneous manner, so that a finished product cross-linked in a uniform manner is obtained.

In this case air movement is carried out by drawing off the air present in the return duct 110 through the discharge valve 122, and then restoring the operating pressure by admitting air to duct 129 through the delivery valve 124, and subsequently to mould 102 through the delivery duct 109.

The reduced complexity of device 120 for fluid circulation is due to the fact that air, unlike a fluid such as nitrogen, has a substantially negligible cost and therefore can be discharged in the surrounding atmosphere.

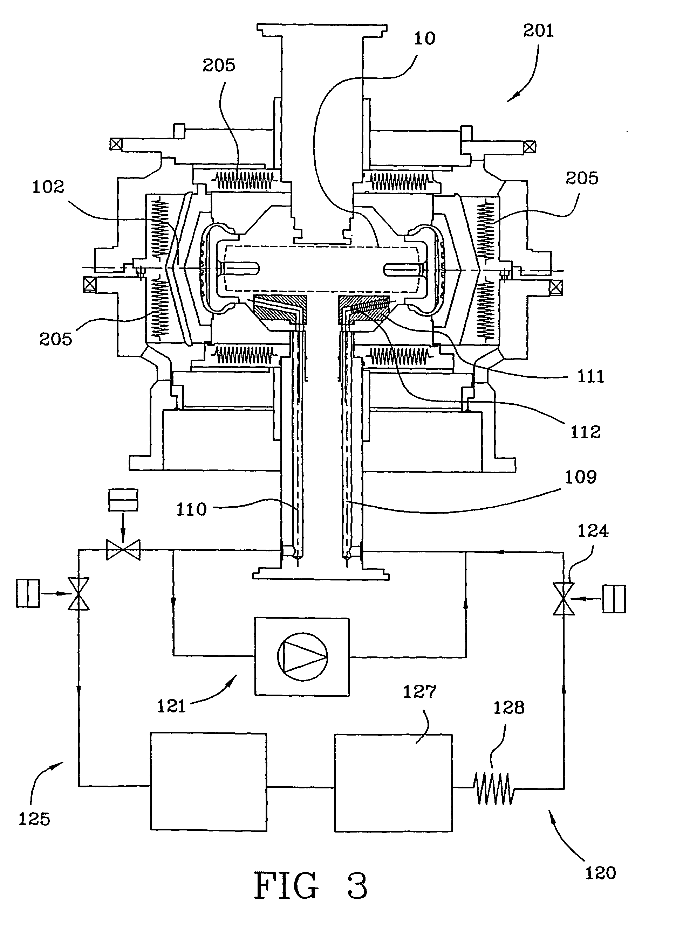

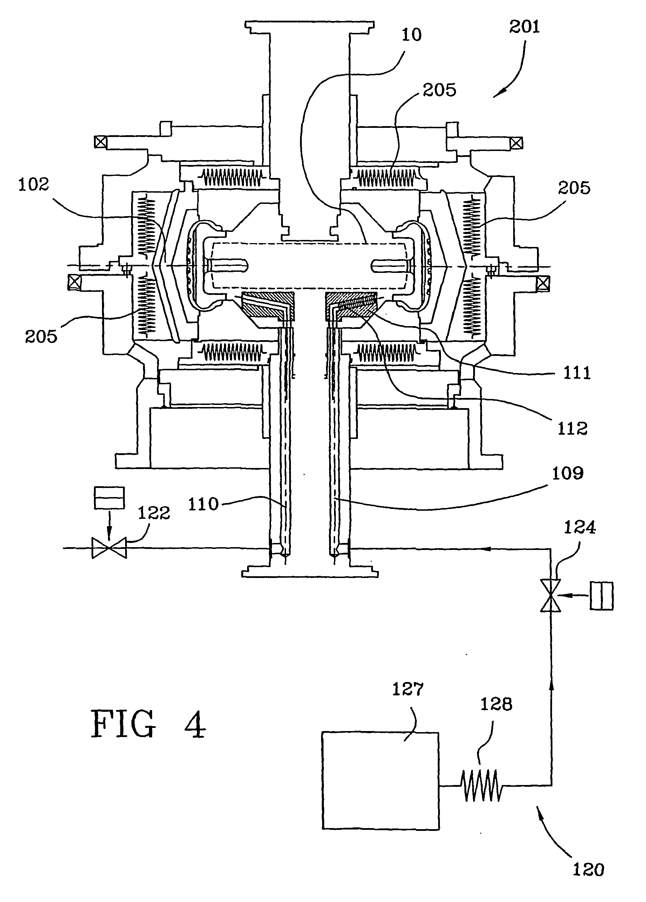

In an alternative variant which is not part of the present invention, the heat exchanger 107 can be replaced by one or more electrical resistors 128 placed downstream of compressor 127. In this case the preheating temperature (about 80°C-100°C) is reached downstream of said resistor 128, and the fluid coming out of the delivery valve 124 is directly admitted to the delivery duct 109 by the circulation device 120. The fluid-preheating step in this case is therefore performed by said resistor 128.
In a different embodiment, which is not part of the present invention, an apparatus 201 for moulding and vulcanization of vehicle tyres in accordance with the invention shown in Figs. 3, 4 contemplates the presence, unlike apparatus 101, of a plurality of electrical resistors 205 for the purpose of keeping the mould 102 to temperature during said moulding and vulcanization process.
In addition, in said different embodiment which is not part of the present invention, said step of preheating the working fluid is preferably carried out downstream of compressor 127 by one or more resistors 128 that can also be replaced by a plate-type heat exchanger. In this way, irrespective of the working fluid employed or the type of circulation carried out, i.e. a circulation of the closed-circuit type or of the open-circuit type, said working fluid is directly sent to said delivery duct 109 on opening of the delivery valve 124.
It will be understood that in this different embodiment of apparatus 201 which is not part of the present invention, the heating devices are preferably electric, whereas the moulding and vulcanization process is substantially identical with the previously described process.

## Claims

1. A method of moulding and curing a tyre for vehicle wheels comprising the following steps: building a green tyre on a toroidal support (10) having an outer surface the shape of which substantially matches that of an inner surface of said green tyre; placing said green tyre carried by said toroidal support (10) into a moulding cavity (104) defined in a vulcanization mould (102), said moulding cavity (104) having walls conforming in shape to an outer surface of said tyre when vulcanization has been completed; pressing an outer surface of said green tyre against the walls of said moulding cavity (104) by means of a working fluid under pressure flowing in at least one diffusion gap between said outer surface of said toroidal support (10) and said inner surface of said green tyre; heating said working fluid under pressure so as to supply heat to said green tyre in order to enable vulcanization of same, said working fluid under pressure in contact with said green tyre having a critical temperature lower than the vulcanization temperature; supplying heat to said green tyre also by heating of said mould (102); **characterized in that** the working fluid is submitted to circulation through at least one forced ventilation system (121) operatively associated with delivery/return ducts (109, 110) for said working fluid; and **in that** a step of pre-heating said working fluid is provided, wherein said pre-heating step utilizes the heat for heating said mould (102) by means of a heat exchanger (107).

2. A method of moulding and curing a tyre for vehicle wheels as claimed in claim 1, wherein said circulation is of the closed-circuit type.

3. A method of moulding and curing a tyre for vehicle wheels as claimed in claim 1, wherein said circulation is of the open-circuit type.

4. A method of moulding and curing a tyre for vehicle wheels as claimed in claim 3, wherein said circulation step takes place by drawing said fluid off to the outside and restoring pressure through inflow of said fluid under pressure.

5. A method of moulding and curing a tyre for vehicle wheels as claimed in claim 1, wherein a step of recovering said fluid to use it again in a subsequent vulcanization operation is provided.

6. An apparatus for moulding and curing a tyre for vehicle wheels comprising: a vulcanization mould (102) arranged to receive a toroidal support (10) adapted to support a green tyre within a moulding cavity (104); at least one passage device adapted to feed a working fluid under pressure, which is formed through the toroidal support (10) and opens onto the outer surface of said support so as to press the outer surface of the green tyre against the walls of said moulding cavity (104); heating devices to transmit heat to said green tyre, at least one circulation device (120) for said working fluid under pressure to enable circulation within said moulding cavity; wherein said heating devices comprise a plurality of ducts (105, 106) passed through by steam to heat the mould (102); **characterized in that** said circulation device (120) comprises at least one forced ventilation system (121) operatively associated with delivery/return ducts (109, 110) for said working fluid; and **in that** said heating devices comprise a heat exchanger (107) to transfer heat from said steam to said working fluid preheating it.

7. An apparatus for moulding and curing a tyre for vehicle wheels as claimed in claim 6, wherein said heating devices comprise at least one series of electrical resistors (112) to heat said working fluid to a predetermined temperature.

8. An apparatus for moulding and curing a tyre for vehicle wheels as claimed in claim 6, wherein said circulation device (120) comprises a recovery system (125) for said working fluid comprising a recovery chamber (126) and a compressor (127) disposed in series, said recovery system (125) being associated with said forced ventilation system (121).

9. An apparatus for moulding and curing a tyre for vehicle wheels as claimed in claim 6, wherein said circulation device (120) comprises a discharge valve (122), a compressor (127), a delivery valve (124) and ducts (129) associated therewith.

## Patentansprüche

1. Verfahren zum Ausformen und Vulkanisieren eines Reifens für Fahrzeugräder, wobei das Verfahren die folgenden Schritte aufweist:
- Aufbauen eines Rohreifens auf einem torusförmigen Träger (10), der eine Außenfläche hat, deren Form der einer Innenfläche des Rohreifens im Wesentlichen entspricht,
- Anordnen des von dem torusförmigen Träger (10) gehaltenen Rohreifens in einem in einer Vulkanisierform (102) ausgebildeten Ausformhohlraum (104), der Wände aufweist, die formmäßig einer Außenfläche des Reifens nach Abschluss der Vulkanisierung entsprechen,
- Pressen einer Außenfläche des Rohreifens gegen die Wände des Ausformhohlraums (104) mit Hilfe eines unter Druck stehenden Arbeitsfluids, das in wenigstens einen Ausbreitungsspalt zwischen der Außenfläche des torusförmigen Trägers (10) und der Innenfläche des Rohreifens strömt,
- Erhitzen des unter Druck stehenden Arbeitsfluids derart, dass dem Rohreifen Wärme zugeführt wird, um seine Vulkanisierung zu ermöglichen, wobei das unter Druck und in Kontakt mit dem Rohreifen stehende Arbeitsfluid eine kritische Temperatur hat, die niedriger als die Vulkanisiertemperatur ist, und
- Zuführen von Wärme zu dem Rohreifen auch durch Erhitzen der Form (102),
**dadurch gekennzeichnet,**
- **dass** das Arbeitsfluid einer Umwälzung durch wenigstens ein Zwangsventilationssystem (121) unterworfen wird, das den Zuführ-/Rückführkanälen (109, 110) für das Arbeitsfluid funktionsmäßig zugeordnet ist, und
- **dass** für das Arbeitsfluid ein Vorerhitzungsschritt vorgesehen wird, bei dem die Wärme zum Erhitzen der Form (102) mit Hilfe eines Wärmeaustauschers (107) genutzt wird.

2. Verfahren zum Ausformen und Vulkanisieren eines Reifens für Fahrzeugräder nach Anspruch 1, bei welchem die Umwälzung eine Bauweise mit geschlossenem Kreislauf aufweist.

3. Verfahren zum Ausformen und Vulkanisieren eines Reifens für Fahrzeugräder nach Anspruch 1, bei welchem die Umwälzung eine Bauweise mit offenem Kreislauf aufweist.

4. Verfahren zum Ausformen und Vulkanisieren eines Reifens für Fahrzeugräder nach Anspruch 3, bei welchem der Umwälzungsschritt **dadurch** erfolgt, dass Fluid nach außen hin abgezogen wird und der Druck durch einen Zustrom des unter Druck stehenden Fluids wiederhergestellt wird.

5. Verfahren zum Ausformen und Vulkanisieren eines Reifens für Fahrzeugräder nach Anspruch 1, bei welchem ein Schritt der Wiedergewinnung des Fluids für seine Wiederverwendung in einem darauffolgenden Vulkanisiervorgang vorgesehen wird.

6. Vorrichtung zum Ausformen und Vulkanisieren eines Reifens für Fahrzeugräder, welche
- eine Vulkanisierform (102), die für die Aufnahme eines torusförmigen Trägers (10) angeordnet ist, der zum Halten eines Rohreifens in einem Ausformhohlraum (104) angepasst ist,
- wenigstens eine für die Zuführung eines unter Druck stehenden Arbeitsfluids angepasste Kanalvorrichtung, die durch den torusförmigen Träger (10) hindurch ausgebildet ist und auf der Außenfläche des Trägers mündet, so dass die Außenfläche des Rohreifens gegen die Wände des Ausformhohlraums (104) gedrückt wird,
- Heizvorrichtungen zum Übertragen von Wärme auf den Rohreifen und
- wenigstens eine Umwälzungsvorrichtung (120) für das unter Druck stehende Arbeitsfluid aufweist, um eine Umwälzung in dem Ausformhohlraum zu ermöglichen,
- wobei die Heizvorrichtungen eine Vielzahl von Kanälen (105, 106) aufweisen, durch die Dampf zum Erhitzen der Form (102) hindurchgeführt wird,
**dadurch gekennzeichnet,**
- **dass** die Umwälzungsvorrichtung (120) wenigstens ein Zwangsventilationssystem (121) aufweist, das den Zuführ-/Rückführkanälen (109, 110) für das Arbeitsfluid funktionsmäßig zugeordnet ist, und
- **dass** die Heizvorrichtungen einen Wärmeaustauscher (107) zum Übertragen von Wärme von dem Dampf auf das Arbeitsfluid für dessen Vorheizung aufweisen.

7. Vorrichtung zum Ausformen und Vulkanisieren eines Reifens für Fahrzeugräder nach Anspruch 6, bei welcher die Heizvorrichtungen wenigstens eine Reihe von elektrischen Widerständen (110) zum Erhitzen des Arbeitsfluids auf eine vorgegebene Temperatur aufweisen.

8. Vorrichtung zum Ausformen und Vulkanisieren eines Reifens für Fahrzeugräder nach Anspruch 6, bei welcher die Umwälzungsvorrichtung (120) ein Rückgewinnungssystem (125) für das Arbeitsfluid mit einer Rückgewinnungskammer (126) und einem in Reihe geschalteten Verdichter (127) aufweist, wobei das Rückgewinnungssystem (125) dem Zwangsventilationssystem (121) zugeordnet ist.

9. Vorrichtung zum Ausformen und Vulkanisieren eines Reifens für Fahrzeugräder nach Anspruch 6, bei welcher die Umwälzungsvorrichtung (120) ein Förderventil (122), einen Verdichter (127), ein Förderventil (124) und zugehörige Leitungen (129) aufweist.

## Revendications

1. Procédé de moulage et de durcissement d'un pneu pour roues de véhicule comprenant les étapes suivantes : fabrication d'un pneu cru sur un support toroïdal (10) ayant une surface extérieure dont la forme s'adapte substantiellement à celle d'une surface intérieure dudit pneu cru, mise en place dudit pneu cru porté par ledit support toroïdal (10) dans une cavité de moulage (104) définie dans un moule de vulcanisation (102), ladite cavité de moulage (104) ayant des parois qui correspondent à la forme d'une surface extérieure dudit pneu lorsque la vulcanisation a été effectuée, pressage d'une surface extérieure dudit pneu cru contre les parois de ladite cavité de moulage (104) au moyen d'un fluide de travail sous pression qui s'écoule dans au moins un interstice de diffusion entre ladite surface extérieure du support toroïdal (10) et ladite surface intérieure du pneu cru, chauffage dudit fluide de travail sous pression pour transmettre de la chaleur audit pneu cru afin de permettre la vulcanisation de ce dernier, ledit fluide de travail sous pression en contact avec ledit pneu cru ayant une température critique inférieure à la température de vulcanisation, transmission de chaleur audit pneu cru aussi par chauffage dudit moule (102), **caractérisé en ce que** le fluide de travail est soumis à une circulation dans au moins un système de ventilation forcée (121) associé fonctionnellement à des conduits de distribution/retour (109, 110) pour ledit fluide de travail, et **en ce qu'**une étape de préchauffage dudit fluide de travail est prévue, ladite étape de préchauffage utilisant la chaleur servant à chauffer le moule (102) au moyen d'un échangeur de chaleur (107).

2. Procédé de moulage et de durcissement d'un pneu pour roues de véhicule selon la revendication 1, dans lequel ladite circulation est du type en circuit fermé.

3. Procédé de moulage et de durcissement d'un pneu pour roues de véhicule selon la revendication 1, dans lequel ladite circulation est du type en circuit ouvert.

4. Procédé de moulage et de durcissement d'un pneu pour roues de véhicule selon la revendication 3, dans lequel ladite étape de circulation a lieu en faisant sortir ledit fluide à l'extérieur et en rétablissant la pression par injection dudit fluide sous pression.

5. Procédé de moulage et de durcissement d'un pneu pour roues de véhicule selon la revendication 1, dans lequel est prévue une étape de récupération dudit fluide pour le réutiliser dans une opération de vulcanisation suivante.

6. Appareil pour mouler et durcir un pneu pour roues de véhicule comprenant : un moule de vulcanisation (102) conçu pour recevoir un support toroïdal (10) adapté pour supporter un pneu cru à l'intérieur d'une cavité de moulage (104), au moins un dispositif formant conduit, adapté pour l'injection d'un fluide de travail sous pression, qui est formé à travers le support toroïdal (10) et débouche sur la surface extérieure dudit support afin de presser la surface extérieure du pneu cru contre les parois de ladite cavité de moulage (104), des dispositifs chauffants pour transmettre de la chaleur audit pneu cru, au moins un dispositif de circulation (120) pour ledit fluide de travail sous pression pour permettre la circulation dans ladite cavité de moulage, lesdits dispositifs chauffants comprenant une pluralité de conduits (105, 106) dans lesquels passe de la vapeur pour chauffer le moule (102), **caractérisé en ce que** ledit dispositif de circulation (120) comprend au moins un système de ventilation forcée (121) associé fonctionnellement à des conduits de distribution/retour (109, 110) pour ledit fluide de travail, et **en ce que** lesdits dispositifs chauffants comprennent un échangeur de chaleur (107) pour transférer de la chaleur de ladite vapeur vers ledit fluide de travail pour préchauffer ce dernier.

7. Appareil pour mouler et durcir un pneu pour roues de véhicule selon la revendication 6, dans lequel lesdits dispositifs chauffants comprennent au moins une série de résistances électriques (112) pour chauffer ledit fluide de travail à une température prédéterminée.

8. Appareil pour mouler et durcir un pneu pour roues de véhicule selon la revendication 6, dans lequel ledit dispositif de circulation (120) comprend un système de récupération (125) pour ledit fluide de travail comprenant une chambre de récupération (126) et un compresseur (127) disposés en série, ledit système de récupération (125) étant associé audit système de ventilation forcée (121).

9. Appareil pour mouler et durcir un pneu pour roues de véhicule selon la revendication 6, dans lequel ledit dispositif de circulation (120) comprend une soupape de refoulement (122), un compresseur (127), une soupape de distribution (124) et des conduites (129) qui leur sont associées.
